# EUROPÄISCHE PATENTSCHRIFT

(11) **EP 2 625 045 B1**
(45) Veröffentlichungstag und Bekanntmachung des Hinweises auf die Patenterteilung: **20.04.2016**
(21) Anmeldenummer: 11776088.4
(22) Anmeldetag: 07.10.2011
(51) Int. Cl.: B60B 3/14, B60B 3/16, F16B 5/02, F16B 35/04, F16B 39/24, F16B 43/02

(54) **FORMSCHLUSSVERBINDUNG MIT AUSGLEICH VON LAGEFEHLERN**
INTERLOCKING CONNECTION WITH COMPENSATION OF POSITION ERRORS
LIAISON PAR COMPLÉMENTARITÉ DE FORME AVEC COMPENSATION DES DÉFAUTS DE POSITION

(30) Priorität: 08.10.2010 DE 102010038067
(43) Veröffentlichungstag der Anmeldung: 14.08.2013
(73) Patentinhaber: Weiss, Wolfgang, 85521 Ottobrunn (DE)
(72) Erfinder: Weiss, Wolfgang, 85521 Ottobrunn (DE)
(74) Vertreter: Schlimme, Wolfram
(86) Internationale Anmeldenummer: PCT/EP2011/005024
(87) Internationale Veröffentlichungsnummer: WO 2012/045471

(56) Entgegenhaltungen:
- WO-A1-98/13220
- WO-A1-02/075170
- GB-A- 400 887
- GB-A- 190 512 207
- US-A- 5 057 111
- US-A- 5 269 784
- US-A- 5 797 912

## Beschreibung

Die vorliegende Erfindung betrifft eine Formschlussverbindung mit Ausgleich von Lagefehlern, insbesondere von Achsversatz und/oder Achswinkelabweichung, nach dem Oberbegriff des Patentanspruchs 1. Sie betrifft weiterhin eine Schraube, eine Mutter und ein Ausgleichselement einer derartigen Formschlussverbindung.

Formschlussverbindungen, die zwei Teile miteinander verbinden und die in der Lage sind, bezüglich einer Verbindungsachse radiale Kräfte spielfrei aufzunehmen, müssen eine exakte und toleranzenfreie Übereinstimmung der Achsen der jeweiligen Formschlusselemente in den miteinander zu verbindenden Teilen aufweisen. Ist zur Befestigung der beiden Teile miteinander mehr als eine Formschlussverbindung vorgesehen, die jeweils eine spielfreie Aufnahme von radialen Kräften gewährleisten soll, so entsteht regelmäßig eine geometrische Überbestimmung, da bei der Fertigung der Formschlusselemente stets Toleranzen auftreten, die zu Fluchtungsfehlern führen können. Derartige geometrische Überbestimmungen sind unerwünscht und sind somit zu vermeiden.

In der Literaturstelle Symonds, Pat, "Why loose wheels drive us nuts", in RACE TECH INTERNATIONAL, vol. 17, issue 7 (May 2010) wird die Problematik des Achsversatzes zwischen Rad und Radbefestigung bei Radverbindungen beschrieben.

Die US 4,860,513 A zeigt und beschreibt eine Dachschindelbefestigung, die aus einer Schraube und einer Unterlegscheibe besteht, wobei der Schraubenkopf auf seiner zum Schaft weisenden Seite mit einer den Schaft umgebenden balligen Ringfläche versehen ist. Eine an diese Balligkeit angepasste konkave Ausnehmung ist in einem mittleren verdickten Abschnitt der Unterlegscheibe vorgesehen. Dieser verdickte Abschnitt ist an seinem radialen Außenumfang ebenfalls mit einer konvex-balligen Außenfläche versehen, die ihrerseits in eine angepasste konkave Ausnehmung in der oberen Dachfläche eingreift. Einstückig mit dem verdickten Abschnitt der Unterlegscheibe ist ein diesen Abschnitt umgebender ringförmiger flacher Abschnitt ausgebildet, der sich auf die Dachoberfläche auflegt und die von der Schraube nach dem Einschrauben auf die Unterlegscheibe aufgebrachte Kraft gegen die Dachoberfläche abstützt.

Die gattungsbildende GB 400 887 A betrifft eine verbesserte Befestigung von Fahrzeugrädern an Fahrzeugen. Dabei ist an einer mit dem Fahrzeug drehfest verbundenen Bremstrommel ein Gewinde-Stehbolzen vorgesehen, dessen zwischen dem Gewinde und der Bremstrommel gelegener Abschnitt eine ringförmige ballige Außenfläche aufweist. Auf diese ballige Außenfläche des Stehbolzens ist ein entsprechend konkav geformter Abschnitt einer Radfelge aufgesetzt, der eine Durchtrittsöffnung für den Gewindeabschnitt des Stehbolzens umgibt. Auf den Gewindeabschnitt des Stehbolzens ist eine Mutter aufgeschraubt, die auf ihrer zur Radfelge weisenden Seite einen in Richtung auf die Felge vorstehenden ringförmigen Kragen aufweist, der an seiner Innenseite mit einer konkaven sphärischen Fläche versehen ist, die sich auf einem die Durchtrittsöffnung der Felge umgebenden äußeren konvexen Ringabschnitt der Felge abstützt.

Die WO 2002/075170 A1 zeigt und beschreibt eine Schraubverbindung, bei der zwei zueinander nicht parallel liegende Teile durch eine Schrauben-Muttern-Anordnung miteinander verbunden werden können, bei der der Schraubenkopf mit einem Bund an einer ringförmigen Fläche eines hülsenartigen Elements anliegt, welches an seiner radialen Außenseite eine ballige Form aufweist. Diese ballige Außenseite liegt an einer entsprechend konkav ausgebildeten Innenseite eines Einsatzstücks an, welches einen zylindrischen Außendurchmesser aufweist und in das erste Teil eingesetzt ist. Das Einsatzstück steht mit einer aus dem ersten Teil herausragenden sphärischen konvexen Fläche in Kontakt mit einer konkaven Fläche im zweiten Teil.

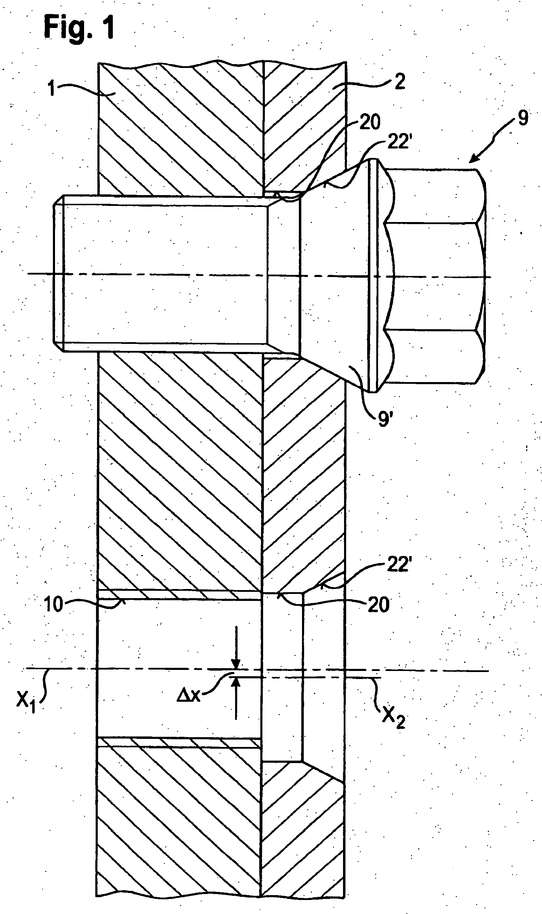

Ein Beispiel für eine Formschlussverbindung ist in Fig. 1 dargestellt.

In Fig. 1 sind ein erstes und ein zweites miteinander zu verbindendes Teil 1, 2 gezeigt, die über einen in eine Befestigungsbohrung 10 im ersten Teil 1 eingeschraubten Bolzen 9 mit Zentrierkonus 9' (erstes Formschlusselement), der eine Bohrung 20 mit Zentrierkonus 22' (zweites Formschlusselement) durchgreift, miteinander verbunden sind. Der Bolzen 9, der beispielsweise als Zentrierschraube ausgebildet ist und mit seinem Zentrierkonus 9' am Zentrierkonus 22' der Bohrung 20 anliegt, sorgt dafür, dass die beiden Teile 1, 2 in Axialrichtung des Bolzens 9 und auch in Radialrichtung zum Bolzen 9 spielfrei zueinander positioniert sind. Stollen die beiden Teile 1, 2 zusätzlich noch an einer weiteren Stelle miteinander durch eine Formschlusseinrichtung verbunden werden, die ebenfalls in der Lage ist, radial zur Bolzenachse verlaufende Kräfte aufzunehmen, so wäre die gesamte Verbindung zwischen den beiden Teilen 1, 2 nur dann geometrisch bestimmt, wenn dort die Achse X₁ der Befestigungsbohrung 10 im ersten Teil 1 und die Achse X₂ der Bohrung 20 im zweiten Teil 2 identisch wären. Dies ist jedoch aufgrund von Fertigungstoleranzen in der Praxis regelmäßig nicht der Fall. Im Beispiel der Fig. 1 sind die beiden Achsen X₁ und X₂ um den Abstand Δx zueinander versetzt.

Es wäre zwar möglich, die zweite Verbindung zwischen dem ersten und dem zweiten zu verbindenden Teil 1, 2 mittels einer in die beispielsweise als Gewindebohrung ausgebildete Bohrung 10 des ersten Teils 1 einzuschraubenden Schraube vorzunehmen, bei der sich der Schraubenkopf an der in Fig. 1 rechten Außenseite des zweiten Teils 2 abstützt, doch würde eine derartige Schraubverbindung das erste Teil 1 und das zweite Teil 2 lediglich in Axialrichtung der Schraube verspannen, aber keine radial zur Achse X₁ wirkenden Kräfte aufnehmen können. Diese Art einer Verbindung erlaubt zwar einen Ausgleich von Achsversatz und geringfügiger Achswinkelabweichung, ist aber für die Aufnahme von Radialkräften ungeeignet.

Die in Fig. 1 beispielhaft dargestellte erste Fixierung der beiden Teile 1, 2 zueinander mittels des Schraubbolzens 9 kann auch auf andere Weise (zum Beispiel mittels Nieten) erfolgen.

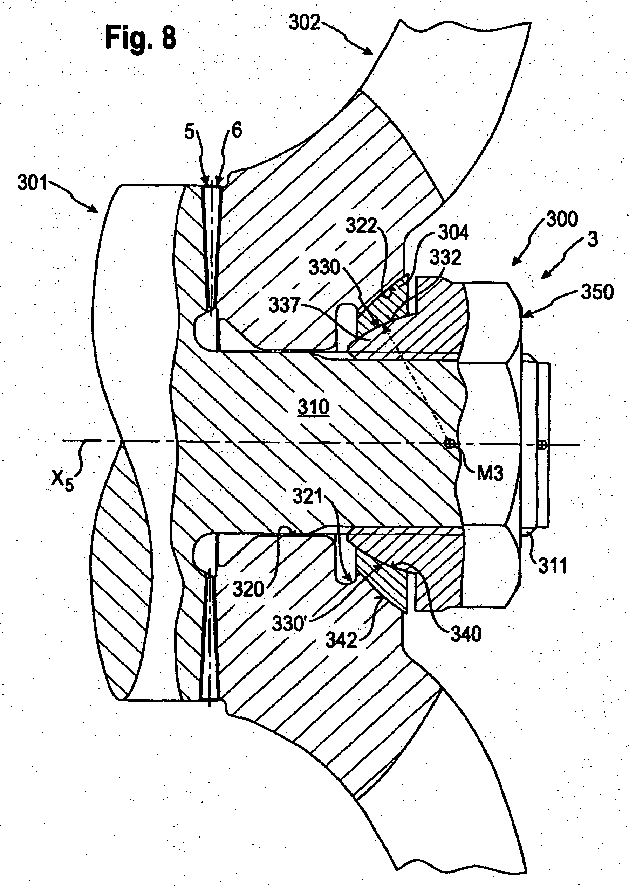

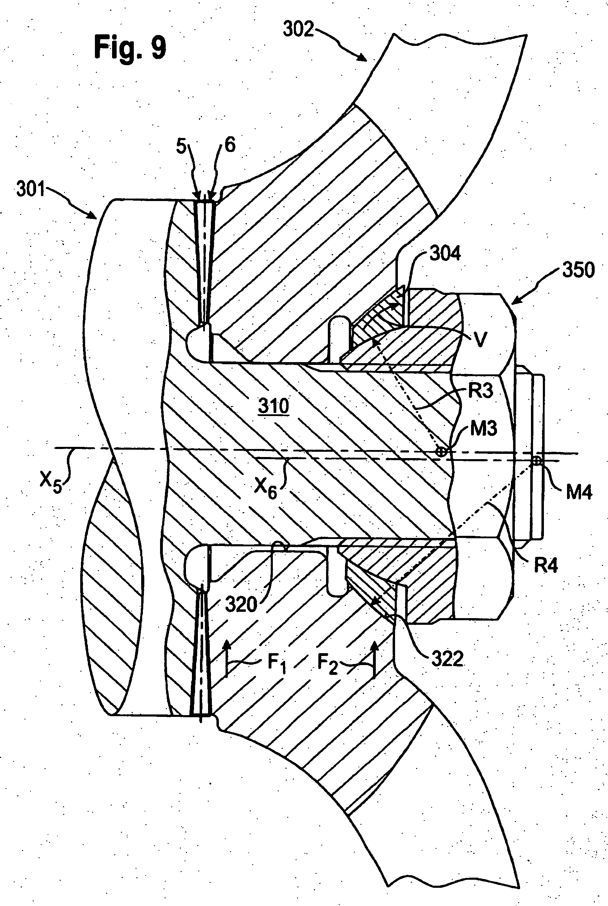

Ein Beispiel, bei welchem die beiden Teile mittels einer ringförmigen Plan-Kerbverzahnung, die als Hirth-Verzahnung ausgebildet ist, ist in Fig. 8 und 9 gezeigt und wird in der Figurenbeschreibung erläutert. Die Zentrierung eines Rades, beispielsweise eines Fahrzeugrades, an einem Radträger mittels einer Plan-Kerbverzahnung und dessen Befestigung am Radträger mittels eines Zentralverschlusses ist aus der EP 0 928 249 B1 bekannt. Allerdings ist die dort offenbarte Schraubverbindung nicht in der Lage, radiale Stützkräfte über die Mutter aufzunehmen.

Aufgabe der vorliegenden Erfindung ist es daher, eine Formschlussverbindung anzugeben, die bei Fixierung der beiden zu verbindenden Teile in Axialrichtung der Formschlusselemente in der Lage ist; in Radialrichtung auftretende Kräfte an mehr als einem Ort aufzunehmen, ohne dass eine geometrische Überbestimmung der gesamten Anordnung eintritt.

Diese Aufgabe wird durch die Formschlussverbindung mit den Merkmalen des Patentanspruchs 1 gelöst.

Dazu ist die Formschlussverbindung versehen mit einem ersten und einem zweiten miteinander zu verbindenden Teil und besitzt als erfinderische Besonderheit ein erstes, dem ersten Teil zugeordnetes kreisförmiges Formschlusselement; ein zweites, dem zweiten Teil zugeordnetes kreisförmiges Formschlüsselement und ein zwischen dem ersten Formschlusselement und dem zweiten Formschlusselement vorgesehenes Ausgleichselement. Dabei sind die Formschlusselemente in ihrer axialen Lage bestimmt und bilden mit dem Ausgleichselement eine Formschlusseinrichtung, die das erste Teil und das zweite Teil zueinander positioniert. Das erste Formschlusselement ist auf seiner zum zweiten Formschlusselement weisenden Seite mit einer ersten kugelsegmentartig gekrümmten Fläche versehen, deren Krümmungsmittelpunkt auf der Achse des ersten Formschlusselements gelegen ist. Das zweite Formschlusselement ist auf seiner zum ersten Formschlusselement weisenden Seite mit einer zweiten kugelsegmentartig gekrümmten Fläche versehen, deren Krümmungsmittelpunkt auf der Achse des zweiten Formschlusselements gelegen ist, und das Ausgleichselement weist auf seinen in Axialrichtung voneinander abgewandten Seiten jeweils eine dritte beziehungsweise eine vierte kugelsegmentartig gekrümmte Fläche auf, deren jeweilige Krümmung an die ihr gegenüber gelegene erste beziehungsweise zweite kugelsegmentartig gekrümmte Fläche angepasst ist.

Die erfindungsgemäße Ausgestaltung der Formschlusselemente und das Vorsehen des erfindungsgemäß ausgestalteten Ausgleichselements sorgen dafür, dass Lageabweichungen zwischen den beiden Formschlusselementen innerhalb eines konstruktiv vorgegebenen Rahmens kompensiert werden können. Die Lageabweichungen können dabei sowohl in einer Parallelverschiebung der Achsen, wie dem in Fig. 1 gezeigten Achsversatz, als auch in einer Winkelabweichung dieser beiden Achsen zueinander bestehen und kompensiert werden.

Die erfindungsgemäße Formschlussverbindung ermöglicht es, eine geometrische Überbestimmung zwischen den beiden miteinander zu verbindenden Teilen und ihren Verbindungselementen zu vermeiden und gleichzeitig eine spielfreie Ausrichtung der beiden Teile in einer Richtung parallel zu ihrer gemeinsamen Berührungsebene an mehr als einem Ort zu gewährleisten.

Vorzugsweise sind die erste und die vierte kugelsegmentartig gekrümmte Fläche konvex gekrümmt und die zweite und die dritte kugelsegmentartig gekrümmte Fläche sind konkav gekrümmt.

In einer Ausführungsform der Erfindung können das erste Formschlusselement in einer Öffnung des ersten Teils und das zweite Formschlusselement in einer Öffnung des zweiten Teils vorgesehen sein. Der Formschluss wird dabei nur vom Ausgleichselement hergestellt, das in beide Öffnungen eingreift, wobei zur Verbindung der beiden Teile mehrere erfindungsgemäß ausgestaltete Formschlussverbindungen vorgesehen sein können.

Vorzugsweise ist das Ausgleichselement als Ausgleichsring ausgebildet.

Bei einer anderen Ausführungsform der Erfindung ist das erste Formschlusselement an einer Bolzeneinrichtung vorgesehen, wobei die Bolzeneinrichtung mit dem ersten Teil verbunden und in ihrer axialen Lage bestimmt ist und eine Bohrung des zweiten Teils durchdringt, und das zweite Formschlusselement ist an der Bohrung des zweiten Teils vorgesehen, wobei das zweite Teil zwischen der Bolzeneinrichtung und dem ersten Teil eingespannt ist. Die Bolzeneinrichtung weist an ihrem vom ersten Teil abgewandten Ende auf der zum zweiten Teil weisenden Seite entlang ihres Umfangs zumindest einen radialen Abschnitt auf. Der radiale Abschnitt ist auf der zum zweiten Teil weisenden Seite mit einer ersten kugelsegmentartig gekrümmten Fläche versehen, deren Krümmungsmittelpunkt auf der Achse der Bolzeneinrichtung gelegen ist. Das zweite Teil ist entlang des Umfangs der Bohrung auf der zum radialen Abschnitt der Bolzeneinrichtung weisenden Seite mit einer zweiten kugelsegmentartig gekrümmten Fläche versehen, deren Krümmungsmittelpunkt auf der Achse der Bohrung gelegen ist, und das als Ausgleichsring ausgebildete Ausgleichselement ist zwischen dem zweiten Teil und dem radialen Abschnitt der Bolzeneinrichtung vorgesehen.

In einer bevorzugten Weiterbildung der erfindungsgemäßen, als Bolzenverbindung ausgestalteten Formschlussverbindung ist die Bolzeneinrichtung von einer Schraube gebildet, wobei die Schraube in eine Gewindebohrung des ersten Teils eingeschraubt ist und wobei der radiale Abschnitt an einem Schraubenkopf der Schraube ausgebildet ist.

Alternativ dazu kann die Bolzeneinrichtung von einer Schraube gebildet sein, wobei die Schraube eine Bohrung des ersten Teils durchdringt und in eine sich am ersten Teil abstützende Mutter eingeschraubt ist.

Auch ist es möglich, dass die Bolzeneinrichtung von einem mit dem ersten Teil verbundenen Gewindebolzen und einer auf diesen aufgeschraubten Mutter gebildet ist, wobei dann der radiale Abschnitt an der Mutter vorgesehen ist.

Ist die Bolzeneinrichtung als Schraube oder als Mutter ausgebildet, kann der Ausgleichsring unverlierbar, aber beweglich auf der Schraube beziehungsweise an der Mutter angebracht sein.

Eine bevorzugte Anwendung der erfindungsgemäßen Formschlussverbindung ist die zur Befestigung eines Rades an einer Radaufnahme, insbesondere dann, wenn diese Befestigung mittels eines Zentralverschlusses für das Rad ausgebildet ist. Dabei ist das erste Teil von der Radaufnahme und das zweite Teil vom Rad gebildet. Diese Anwendung zur Befestigung eines Rades an einer Radaufnahme ist nicht nur als Zentralverschluss realisierbar, sondern auch dann, wenn das Rad mittels einer Mehrzahl von zentrierenden Bolzeneinrichtungen, wie beispielsweise zentrierenden Radschrauben oder Radmuttern, an der Radaufnahme befestigbar ist. Sind diese jeweils sich selbst zentrierenden Bolzeneinrichtungen als erfindungsgemäße Formschlussverbindungen ausgestaltet, so wird zuverlässig eine geometrische Überbestimmtheit der Radbefestigung verhindert.

Vorteilhaft ist eine Weiterbildung der Anwendung als Zentralverschluss eines Rades, bei welcher beispielsweise die Radaufnahme einen mit einem Gewinde versehenen zentralen Radbefestigungsbolzen aufweist und bei welcher der radiale Abschnitt beispielsweise an der auf den Radbefestigungsbolzen aufgeschraubten Mutter vorgesehen ist.

Bevorzugt ist die Radaufnahme mit einer ersten ringförmigen Profilierung, vorzugsweise einer Plan-Kerbverzahnung, wie zum Beispiel einer Hirth-Verzahnung, versehen und das Rad ist mit einer zweiten ringförmigen Profilierung, vorzugsweise einer Plan-Kerbverzahnung, wie zum Beispiel einer Hirth-Verzahnung, versehen, wobei die erste und die zweite ringförmige Profilierung beziehungsweise Verzahnung ineinander greifen und das Rad bezüglich der Radaufnahme zentrieren. Bei dieser Ausführungsform einer Verbindung zwischen der Radaufnahme und dem Rad würde das Vorsehen einer herkömmlichen Bolzenverbindung als Zentralverschluss, bei der eine Radschraube oder eine Radmutter auf der von der Radaufnahme abgewandten Fläche des Rades aufliegt, dazu führen, dass von der Bolzenverbindung nur Axialkräfte in Richtung der Achse der Bolzenverbindung übertragen werden. Radiale Stützkräfte zwischen dem Rad und der Bolzenverbindung würden hierbei nicht abgestützt. Versuche des Anmelders haben ergeben, dass auf ein derart an einer Radaufnahme befestigtes Rad dynamische Kräfte einwirken, die dazu führen können, dass eine oszillierende Bewegung am Auflegeort der Bolzenverbindung auf dem Rad entsteht, welche die Bolzenverbindung mit einem Lösemoment, bei einer Schraubverbindung mit einem Aufdrehmoment, beaufschlagt, was zum Lösen der Bolzenverbindung führen kann. Um die Radialkräfte dieses Lösemoments abstützen zu können, kann es sinnvoll sein, auch im Bereich der Bolzenverbindung des Rades eine spielfreie Verbindung zwischen dem Rad und der Radaufnahme herzustellen. Eine derartige Verbindung würde aufgrund von unvermeidbaren Fertigungstoleranzen jedoch zu einer geometrischen Überbestimmtheit der Befestigung des Rades an der Radaufnahme führen.

An dieser Stelle setzt die Erfindung an und schafft eine Bolzenverbindung für den Zentralverschluss des Rades, die eine geometrische Überbestimmtheit vermeidet, aber in der Lage ist, im statischen und im dynamischen Betrieb auftretende radiale Kräfte vom Rad auch über den Radbefestigungsbolzen auf dem Radträger abzustützen.

Eine bevorzugte Ausgestaltung einer Schraube für eine als Bolzenverbindung ausgebildete erfindungsgemäße Formschlussverbindung zeichnet sich dadurch aus, dass der Schraubenkopf an seiner zum Gewindeabschnitt der Schraube weisenden Seite mit einer kugelsegmentartigen konvex gekrümmten Fläche versehen ist, deren Krümmungsmittelpunkt auf der Achse der Schraube gelegen ist. Vorzugsweise ist der Ausgleichsring bewegbar, aber unverlierbar auf der Schraube angeordnet.

Eine bevorzugte Ausgestaltung einer Mutter für eine als Bolzenverbindung ausgebildete erfindungsgemäße Formschlussverbindung zeichnet sich dadurch aus, dass die Mutter auf zumindest einer axialen Stirnseite mit einer kugelsegmentartig konvex gekrümmten Fläche versehen ist, deren Krümmungsmittelpunkt auf der Achse der Mutter gelegen ist.

Bevorzugt ist eine Ausführung eines Ausgleichselements, insbesondere einer Ausgleichsscheibe oder eines Ausgleichsrings, für eine erfindungsgemäße Bolzenverbindung, bei welcher das Ausgleichselement an seinen beiden axialen Stirnseiten mit jeweils einer kugelsegmentartig gekrümmten Fläche versehen ist, deren jeweiliger Krümmungsmittelpunkt auf der Achse des Ausgleichselements gelegen ist. Fallen die beiden Krümmungsmittelpunkte zusammen, so ist lediglich ein Winkelausgleich möglich, wohingegen dann, wenn die beiden Krümmungsmittelpunkte in Axialrichtung voneinander beabstandet sind, auch ein achsparalleler Versatz der beiden Achsen kompensiert werden kann.
Vorzugsweise ist eine der beiden kugelsegmentartig gekrümmten Flächen des Ausgleichsrings konkav, während die andere der beiden kugelsegmentartig gekrümmten Flächen des Ausgleichsrings konvex ist.

Die Erfindung wird nachfolgend anhand eines Beispiels unter Bezugnahme auf die Zeichnung näher erläutert; in dieser zeigt:
- **Fig. 1**: eine teilweise geschnittene Prinzipdarstellung zweier spielfrei miteinander verbundener Teile;
- **Fig. 2**: eine teilweise geschnittene erste Variante der erfindungsgemäßen Formschlussverbindung als Bolzenverbindung;
- **Fig. 3**: die teilweise geschnittene Bolzenverbindung gemäß Fig. 2 beim Ausgleich eines Achsversatzes;
- **Fig. 4**: die teilweise geschnittene Bolzenverbindung gemäß Fig. 2 beim Ausgleich einer Achswinkelabweichung;
- **Fig. 5**: eine teilweise geschnittene zweite Variante der erfindungsgemäßen Formschlussverbindung als Bolzenverbindung;
- **Fig. 6**: die teilweise geschnittene zweite Variante gemäß Fig. 5 beim Ausgleich eines Achsversatzes;
- **Fig. 7**: einen Ausgleichsring der Formschlussverbindung im Längsschnitt durch eine Achsenebene;
- **Fig. 8**: eine teilweise geschnittene dritte Variante der erfindungsgemäßen Formschlussverbindung als Anwendung beim einem Zentralverschluss eines Rades;
- **Fig. 9**: die teilweise geschnittene dritte Variante gemäß Fig. 8 beim Ausgleich eines Achsversatzes;
- **Fig. 10**: eine Plan-Kerbverzahnung gemäß der in Fig. 8 und 9 gezeigten Anwendung;
- **Fig. 11**: eine teilweise geschnittene vierte Variante der erfindungsgemäßen Formschlussverbindung;
- **Fig. 12**: die teilweise geschnittene vierte Variante gemäß Fig. 11 beim Ausgleich eines Achsversatzes.

In der bereits eingangs beschriebenen Fig. 1 ist im unteren Bereich eine Bohrungspaarung 10, 20 dargestellt, wobei die Bohrung 20 in ihrem vom ersten Teil 1 abgewandten Mündungsbereich mit einer konischen ringförmigen Zentrierfläche 22' versehen ist. Bei dieser Bohrungspaarung 10, 20 sind die beiden Bohrungsachsen X₁ und X₂ um den einen Achsversatz als Achsfehler bildenden Abstand Δx zueinander versetzt.

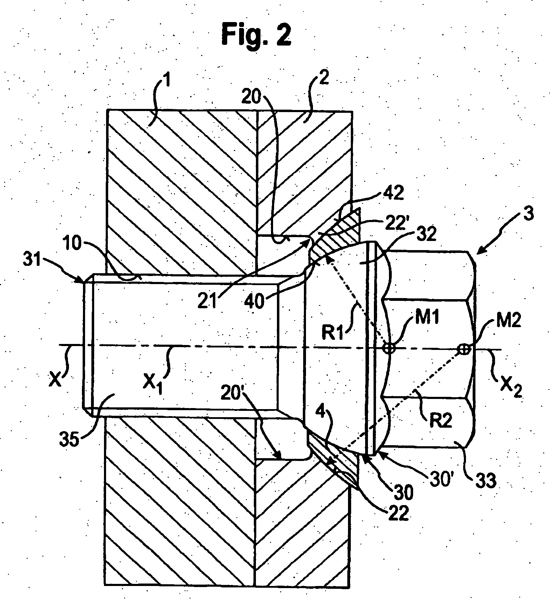

Die Verbindung der beiden Teile 1, 2 mittels einer erfindungsgemäßen Formschlussverbindung als Bolzenverbindung durch diese Bohrungspaarung 10, 20 hindurch wird nachstehend anhand der Fig. 2 bis 6 erläutert.

Fig. 2 zeigt eine Verbindung der beiden Teile 1, 2 mittels einer als Schraube 31 ausgebildeten Bolzeneinrichtung 3 in einem Zustand, in dem kein Lagefehler (zum Beispiel Achsversatz und/oder Achswinkelabweichung) auftritt, also die Achsen X₁ und X₂ identisch sind und mit der Achse X der Bolzeneinrichtung 3 übereinstimmen. Die Bolzenverbindung ist nicht auf eine Schraubverbindung beschränkt; sie kann auch anderweitig, beispielsweise als Bajonettverbindung oder Nietverbindung, ausgestaltet sein.

Bei der gezeigten Ausführungsform dieser Bolzenverbindung ist die Bohrung 10 als Gewindebohrung ausgebildet, in die die Schraube 31 eingeschraubt ist. Die Schraube 31 ist mit einem Schraubenkopf 33 versehen, der an seiner dem in die Gewindebohrung 10 eingeschraubten Gewindeabschnitt 35 zugewandten Seite einen bezüglich des Gewindeabschnitts 35 radial hervorstehenden Abschnitt 30 aufweist. Dieser radiale Abschnitt 30 bildet ein erstes Formschlusselement und ist dazu mit einer ringförmigen kugelsegementartig konvex gekrümmten Fläche 32 versehen.

Der Mittelpunkt M1 des Krümmungsradius' R1 der kugelsegmentartig gekrümmten Fläche 32 liegt auf der Achse X der als Schraube 31 ausgebildeten Bolzeneinrichtung 3. Da im Beispiel der Fig. 2 kein Achsfehler vorliegt, sind die Achse X₁ der Gewindebohrung 10, die der Achse X der Schraube 31 entspricht, und die Achse X₂ der Bohrung 20 miteinander fluchtend.

Die ringförmige Zentrierfläche im Mündungsbereich der Bohrung 20 des zweiten Teils 2 ist als zweites kreisförmiges Formschlusselement 21 ausgebildet und ist dazu mit einer konkav gekrümmten kugelsegmentartigen Fläche 22 versehen. Der Mittelpunkt M2 des Krümmungsradius' R2 der kugelsegmentartig gekrümmten Fläche 22 liegt auf der Achse X₂ der Bohrung 20. Die Mittelpunkte M1 und M2 liegen im Beispiel der Fig. 2 somit auf einer Linie, sind aber in Axialrichtung voneinander beabstandet.

Der Übergang zwischen der Bohrung 20 des zweiten Teils 2 und der kugelsegmentartigen Fläche 22 ist derart ausgebildet, dass der Durchmesser der Bohrung 20 im Bereich des Übergangs eines dem ersten Teil 1 zugewandten zylindrischen Teils 20' der Bohrung 20 zunächst geringer wird, um sich dann entlang der kugelsegmentartig gekrümmten Fläche 22 zu vergrößern. Auf diese Weise ist eine Hinterschneidung des radial innersten Endes der kugelsegmentartig gekrümmten Fläche 22' ausgebildet, wodurch eine besonders vorteilhafte Druckverteilung auf der kugelsegmentartig gekrümmten Fläche 22 erzielt wird:

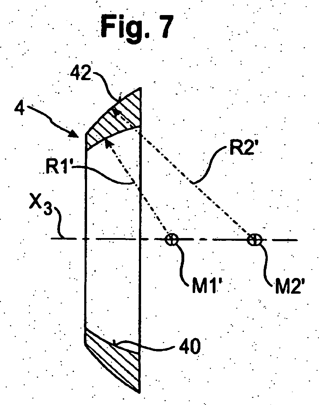

Ein Ausgleichsring 4 ist zwischen die konvex gekrümmte Fläche 32 der Schraube 31 und die konkav gekrümmte Fläche 22 im Mündungsbereich der Bohrung 20 des Teils 2 eingelegt. Dazu ist der Ausgleichsring 4, wie in Fig. 7 gezeigt ist, an seinem Innendurchmesser mit einer kugelsegmentartig konkav gekrümmten Ringfläche 40 versehen, deren Krümmung an die Krümmung der konvex gekrümmten Fläche 32 der Schraube 31 angepasst ist. Die konkave Fläche 40 des Ausgleichsrings 4 kann sich somit an die konvexe Fläche 32 der Schraube 31 passgenau anlegen.

An seiner radialen Außenseite ist der Ausgleichsring 4 mit einer kugelsegmentartig konvex gekrümmten Fläche 42 versehen, deren Krümmung an die Krümmung der konkaven Fläche 22 im Mündungsbereich der Bohrung 20 des Teils 2 angepasst ist. Die konvexe Fläche 42 des Ausgleichsrings 4 kann sich somit passgenau an die konkave Fläche 22 des Teils 2 anlegen.

Wie die Längsschnittansicht des Ausgleichsrings 4 in Fig. 7 zeigt, liegen der Mittelpunkt M1' der Krümmung der gekrümmten Fläche 40 und der Mittelpunkt M2' der gekrümmten Fläche 42 beide auf der Achse X₃ des Ausgleichsrings 4 und zwar auf der gleichen Seite des Ausgleichsrings 4.

Da die konvex gekrümmte Fläche 32 der Schraube 31 und die konkave Innenfläche 40 des Ausgleichsrings 4 jeweils kugelsegmentartig ausgebildet sind, kann sich der Ausgleichsring 4 verschwenken, wobei die jeweiligen gekrümmten Flächen in Berührung miteinander bleiben. Die von der Verschwenkung hervorgerufene Schrägstellung des Ausgleichsrings 4 sorgt dafür, dass der Ausgleichsring auch bei einem Achsversatz in Berührung mit sowohl der Fläche 22 des Teils 2, als auch mit der Fläche 32 der Schraube 31 bleibt.

Die gleichen Krümmungsradien R1 und R1' der kugelsegmentartig gekrümmten Flächen 32 und 40 sind kleiner als die ebenfalls gleichen Krümmungsradien R2 und R2' der kugelsegmentartig gekrümmten Flächen 22 und 42.

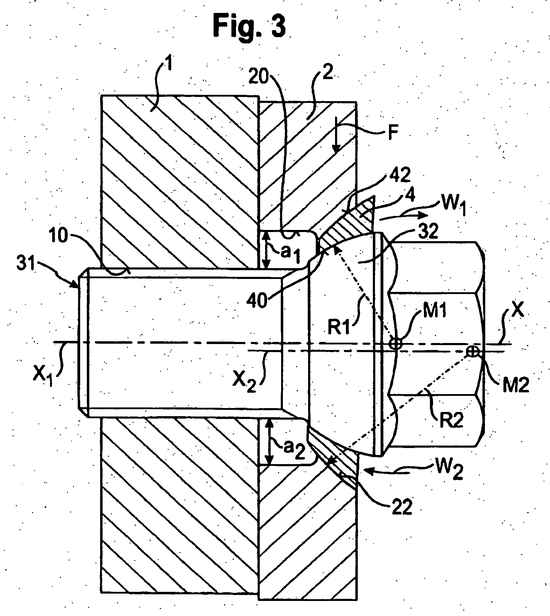

Die Arbeitsweise des Lagefehlerausgleichs der in Fig. 2 dargestellten Variante der erfindungsgemäßen Bolzenverbindung wird nachstehend unter Bezugnahme auf die Fig. 3 erläutert.

In Fig. 3 ist zu erkennen, dass die Achse X₂ der Bohrung 20 des Teils 2 bezüglich der Achse X₁ der Gewindebohrung 10 im Teil 1, die der Achse X der Schraube 31 entspricht, nach unten parallel versetzt ist. Aufgrund dieses Achsversatzes ist der radiale Abstand a₁ zwischen dem Außenumfang der Schraube 31 und dem Innenumfang der Bohrung 20 des Teils 2 an der Oberseite der Schraube 31 in der Darstellung der Fig. 3 kleiner als der entsprechende radiale Abstand a₂ unterhalb der Schraube. Dadurch wird der Ausgleichsring 4 beim Einschrauben der Schraube 31 in die Gewindebohrung 10 in der Schnittdarstellung der Fig. 3 im Uhrzeigersinn verschwenkt, wie durch die Pfeile W₁ und W₂ symbolhaft dargestellt ist. Bei dieser Verschwenkung bleiben die gekrümmten Flächen 40, 42 des Ausgleichsrings 4 stets in Flächenberührung mit der ihnen jeweils zugeordneten gekrümmten Fläche 32 der Schraube 31 beziehungsweise der Fläche 22 des zweiten Teils 2.

Eine vom zweiten Teil 2 auf die Schraube 31 in deren Radialrichtung einwirkende Kraft F kann somit über den Ausgleichsring 4 in die Schraube 31 und damit in das erste Teil 1 eingeleitet werden.

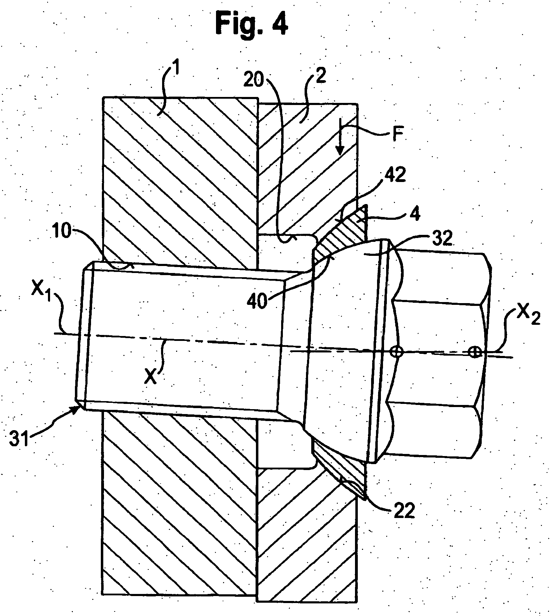

In Fig. 4 ist die erfindungsgemäße Formschlussverbindung gemäß Fig. 2 gezeigt, wobei hier jedoch (übertrieben dargestellt) eine Achswinkelabweichung der Achse X₁ der Gewindebohrung 10 im Teil 1, die mit der Achse X der Schraube 31 übereinstimmt, in Bezug auf die Achse X₂ der Bohrung 20 im Teil 2 kompensiert wird. In Fig. 4 ist zu erkennen, dass trotz dieser durch die Achswinkelabweichung bedingten Schräglage der Schraube 31 die gekrümmte Fläche 32 der Schraube 31 lückenlos an der gekrümmten Fläche 40 des Ausgleichsrings 4 anliegt, so dass die Schraube 31 im Bereich ihrer gekrümmten Fläche 32 entlang des Umfangs flächig am Ausgleichsring anliegt, welcher wiederum mit seiner konvex gekrümmten radialen Außenfläche 42 an der konkav gekrümmten Fläche 22 der Bohrung 20 flächig anliegt, so dass die Schraube 31 entlang ihres gesamten Umfangs über den Ausgleichsring 4 in mittelbarer Berührung mit dem zweiten Teil 2 steht.

Auch bei dieser Achswinkelabweichung kann eine vom zweiten Teil 2 auf die Schraube 31 in deren Radialrichtung einwirkende Kraft F über den Ausgleichsring 4 in die Schraube 31 und somit in das erste Teil 1 eingeleitet werden.

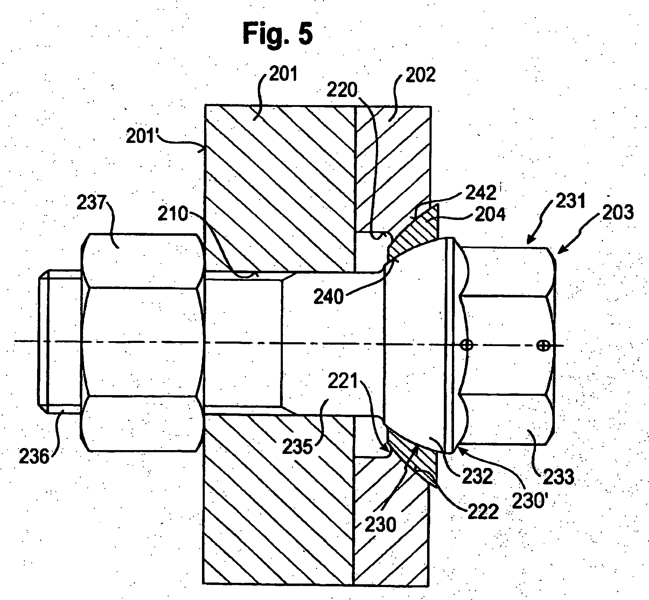

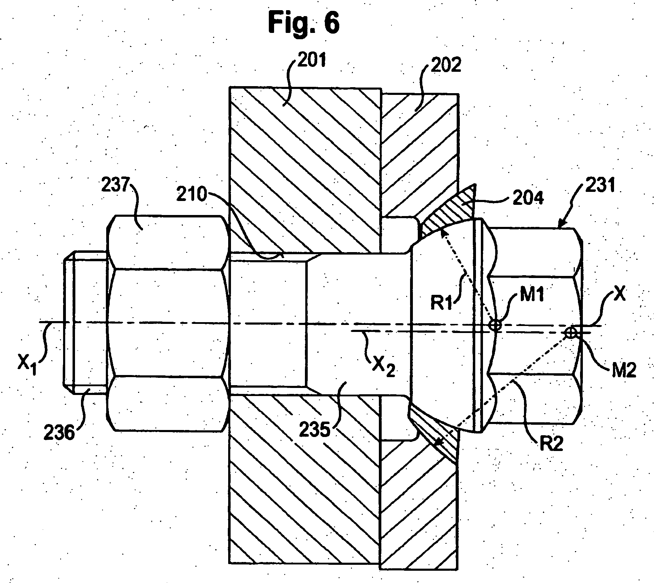

In den Fig. 5 und 6 ist eine zweite Ausführungsform der vorliegenden Erfindung dargestellt, die im Wesentlichen der ersten Ausführungsform, wie sie in den Fig. 2 bis 4 gezeigt ist, entspricht. Die die Bolzeneinrichtung 203 bildende Schraube 231 ist hier jedoch mit einem zylindrischen Schaftabschnitt 235 versehen, der lediglich im Bereich seines freien Endes mit einem Außengewinde 236 versehen ist. Der zylindrische Schaftabschnitt 235 ist dabei durch die Bohrung 220 im zweiten Teil 202 in die als zylindrische Bohrung ohne Innengewinde ausgebildete Bohrung 210 im ersten Teil 201 eingesetzt. Auf das mit dem Außengewinde 236 versehene freie Ende der Schraube 231 ist eine Mutter 237 aufgeschraubt, die auf der vom zweiten Teil 202 abgewandten Außenfläche 201' des ersten Teils 201 aufliegt. Dadurch werden die Teile 201 und 202 über Ausgleichsring 204 verspannt, der sich dabei mit seiner konvexen Fläche 242 auf der im Mündungsbereich der Bohrung 220 ausgebildeten konkaven Fläche 222 (wodurch das zweite Formschlusselement 221 gebildet ist) abstütz und wobei die konkave Fläche 240 des Ausgleichsrings 204 gegen die konvexe Ringfläche 232 an dem das erste Formschlusselement 230' bildenden radialen Abschnitt 230 des Schraubenkopfes 233 anliegt.

Die Schraube 231 entspricht dabei in ihrem Aufbau der Schraube 31 des ersten Ausführungsbeispiels, wie es in den Fig. 2 und 3 gezeigt ist.

Bei der zweiten Ausführungsform erfolgt der Ausgleich von Achsversatz und/oder Achswinkelabweichung, wie in Fig. 6 dargestellt ist, auf die gleiche Weise, wie dies in Verbindung mit der ersten Ausführungsform in Fig. 3 und Fig. 4 gezeigt ist.

Eine dritte Variante der erfindungsgemäßen Bolzenverbindung mit Lagefehlerausgleich ist in den Fig. 8 und 9 am Beispiel eines Zentralverschlusses für ein Rad, beispielsweise ein Fahrzeugrad, dargestellt.

In Fig. 8 ist teilweise geschnitten das Rad 302 gezeigt, das mittels eines die Bolzeneinrichtung 3 bildenden, nachstehend beschriebenen Zentralverschlusses 300 auf einer Radaufnahme 301 befestigt ist.

Die Radaufnahme 301 ist in einem nicht gezeigten Radträger in herkömmlicher Weise mittels geeigneter Wälzlager drehbar gelagert. Ein zentraler Radbefestigungsbolzen 310 erstreckt sich zentral und koaxial zur Achse X₅ der Radaufnahme 301. Im Bereich seines freien Endes ist der Radbefestigungsbolzen 310 mit einem Außengewinde 311 zur Aufnahme einer den radialen Abschnitt 330, der das erste Formschlusselement 330' bildet, aufweisenden aufschraubbaren Mutter 350 versehen. Das zweite Formschlusselement 321 ist am Rad 302 um die Mündung der den zentralen Radbefestigungsbolzen 310 aufnehmenden Durchtrittsbohrung 320 herum ausgebildet und mit der ringförmigen und kugelsegmentartig konkav gekrümmten Fläche 322 versehen. Zwischen der Mutter 350 und dem Rad 302 ist wie im Ausführungsbeispiel der Fig. 2 bis 4 ein Ausgleichsring 304 angeordnet.

Die Gestalt des Ausgleichsrings 304 entspricht der in den Fig. 2 bis 4 und 7 gezeigten Ausführungsform des Ausgleichsrings 4. Demzufolge entspricht das Rad 302 dem zweiten Teil 2 des in den Fig. 2 bis 4 gezeigten ersten Ausführungsbeispiels. Auch die Funktionsweise des Ausgleichsrings 304 mit seiner konvexen und seiner konkaven kugelsegmentartigen Fläche 342 beziehungsweise 340, die mit entsprechenden Gegenflächen 322, 332 am Rad 302 beziehungsweise an einem dem Rad 302 zugewandten ringförmigen Ansatz 337 der Mutter 350 vorgesehen sind, entspricht der in Verbindung mit den Fig. 2 bis 4 beschriebenen Wirkungsweise, wie in Fig. 9 dargestellt ist. Der Mittelpunkt M3 des Krümmungsradius' R3 der kugelsegmentartig gekrümmten Fläche 332 liegt dabei auf der Achse der Mutter 350, die im aufgeschraubten Zustand im wesentlichen mit der Achse X₅ des Radbefestigungsbolzens 310 übereinstimmt.

Die Radaufnahme 301 ist auf ihrer zum Rad 302 weisenden Seite radial vergrößert und bildet dort eine ringförmige Stirnfläche, die sich orthogonal zur Achse X₅ der Radaufnahme 301 erstreckt. Der nicht notwendigerweise, aber im gezeigten Beispiel integral mit der Radaufnahme 301 ausgebildete Radbefestigungsbolzen 310 steht aus dieser Stirnfläche axial hervor. Auf dieser ringförmigen, den Radbefestigungsbolzen 310 umgebenden Stirnfläche ist an der dem Rad 302 zugewandten Seite eine Profilierung 5 ausgebildet, die beispielsweise einen ringförmigen Zahnkranz einer Plan-Kerbverzahnung bildet, welcher zentrisch und rechtwinklig zur Drehachse X₅ der Radaufnahme 301 angeordnet ist. Diese Plan-Kerbverzahnung kann beispielsweise als Hirth-Verzahnung ausgestaltet sein.

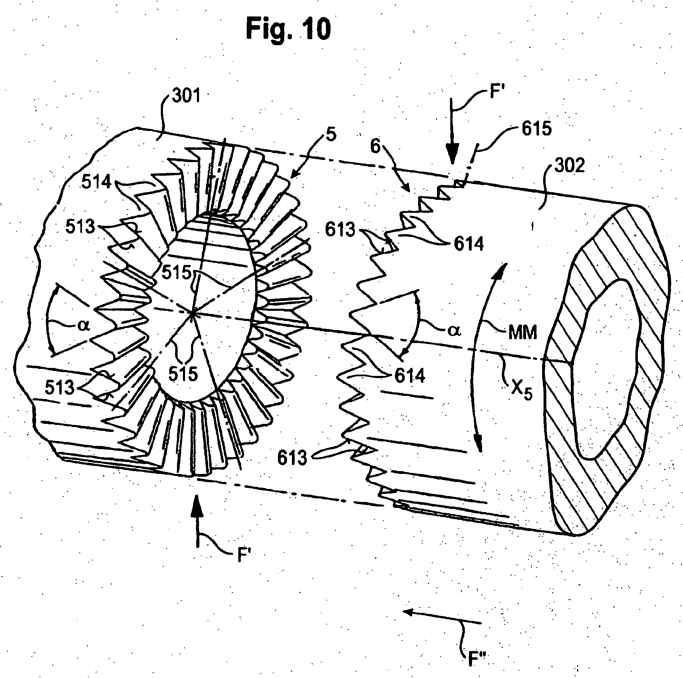

Das Rad 302 weist im Bereich der Radnabe auf seiner der Radaufnahme 301 zugewandten Seite ebenfalls eine ringförmige Profilierung 6 auf, die an die Profilierung 5 der Radaufnahme 301 angepasst ist und die somit ebenfalls als Plan-Kerbverzahnung, vorzugsweise als Hirth-Verzahnung, ausgestaltet sein kann. Die beiden Profilierungen 5, 6 sind zum Eingriff miteinander ausgebildet. Die Ausgestaltung der Profilierungen 5, 6 wird nachstehend unter Bezugnahme auf Fig. 10 erläutert.

In Fig. 10 sind als Profilierungen 5, 6 beispielsweise zwei korrespondierende Plan-Kerb-Verzahnungen perspektivisch dargestellt, wobei eine dem Rad 302 und die andere der Radaufnahme 301 zugeordnet ist. Man erkennt deutlich, dass die Verzahnung durch dreieckige Profilabschnitte 514, 614 gebildet ist, deren Längsachsen 515, 615 sich in der Mittellinie beziehungsweise Drehachse X₅ schneiden. Der Keilwinkel α der Profilabschnitte 514, 614 ist hierbei bezüglich der Längsachse 515, 615 konstant. Selbstverständlich sind auch noch weitere Profilkonfigurationen denkbar.

Die Keilflächen 513 der Profilierung 5 und die Keilflächen 613 der Profilierung 6 sind zur gegenseitigen flächigen Anlage aneinander ausgebildet. Im montierten Zustand des Rades 302 an der Radaufnahme 301 greifen die profilierungen 5, 6 ineinander.

Die Vorspannkraft des Rades 302 wird dabei über die ineinandergreifenden Profilierungen 5, 6 in die Radaufnahme 301 eingeleitet, das heißt von den Keilflächen 513, 613 der Profilierungen 5, 6, beispielsweise der Plan-Kerbverzahnung, derart aufgenommen, dass das Rad 302 durch die keilförmigen Führungs- und Stützflächen zwangsweise in eine bezüglich der drei Raumkoordinaten definierte Position und bezüglich der Drehachse X₅ fluchtend zur Radaufnahme 301 positioniert und fixiert ist.

Über die beiden in Eingriff miteinander befindlichen Profilierungen 5, 6 werden sowohl die Radlasten, die symbolisch durch die Pfeile F' dargestellt sind, als auch Brems- und Antriebsmomente, die durch den Doppelpfeil MM symbolisiert sind, zwischen der Radaufnahme 301 und dem Rad 302 übertragen.

Obwohl das Rad 302 bezüglich der Drehachse X₅ der Radaufnahme 301 durch die in Eingriff miteinander befindlichen Profilierungen 5, 6 bezüglich der drei Raumkoordinaten festgelegt ist, kann es durch Einwirkung von Kippmomenten, die beispielsweise verursacht werden durch an der Aufstandsfläche des Rades 302 einwirkende Querkräfte F", die parallel zur Drehachse X₅ und im seitlichen Abstand dazu einwirken, dazu kommen, dass sich die Keilflächen 513, 613 der Profilierungen 5, 6 aus ihrer gegenseitigen Berührung lösen. Der Erfinder hat bezüglich des Standes der Technik festgestellt, das dies nicht nur zu einer Abnutzung der Oberflächen im Bereich der Profilierungen 5, 6 führt, sondern auch dazu führen kann, dass sich die das Rad 302 an der Radaufnahme 301 fixierende Mutter 350 lösen kann. Um dies zu verhindern, sieht die Erfindung vor, zusätzlich zur Abstützung der Kräfte über die ineinandergreifenden Profilierungen 5, 6, auch eine Abstützung von Radialkräften im Bereich der Mutter 350 des Zentralverschlusses 300 vorzusehen, ohne dass jedoch eine geometrische Überbestimmung der Befestigung des Rades 302 an der Radaufnahme 301 auftritt. Dies wird durch die in den Fig. 8 und 9 dargestellte Anordnung aus dem Ausgleichsring 304 und der Radmutter 350 erreicht.

In der Darstellung der Fig. 9 liegt ein Achsversatz zwischen der Achse X₅ des Radbefestigungsbolzens 310 und der Achse X₆ der Durchtrittsbohrung 320 im Zentrum des Rades 302 vor. Der Mittelpunkt M4 des Krümmungsradius' R4 der konkav gekrümmten Fläche 322 des Rades 302 liegt auf der Radachse X₆.

Da das Rad 302 bereits durch die ineinandergreifenden Profilierungen 5, 6 bezüglich der Radaufnahme 301 geometrisch festgelegt ist, muss sich der Ausgleichsring 304 - wie im Beispiel der Fig. 3 - im Uhrzeigersinn verschwenken, wie durch den Pfeil V symbolisiert ist, um einen Formschluss zwischen dem Rad 302, dem Ausgleichsring 304 und der Mutter 350 zu bewirken, wenn die Mutter 350 auf den Radbefestigungsbolzen 310 aufgeschraubt ist.

Diese Befestigung eines Rades 302 an einer Radaufnahme 301 gestattet es, Radialkraftkomponenten von auf das Rad 302 im statischen und im dynamischen Zustand einwirkenden Kräften sowohl über die miteinander in Eingriff befindlichen Profilierungen 5, 6, als auch über den Ausgleichsring 304 und die Mutter 350 in die Radaufnahme 301 einleiten zu können, wie durch die Pfeile F₁ und F₂ symbolisiert ist. Dadurch wird die Verbindung der beiden ineinandergreifenden Profilierungen 5, 6 von Momenten entlastet, die bei einer herkömmlichen Zentralverschraubung des Rades 302 zum oben beschriebenen Abheben der Profilzähne und zu einer dadurch bedingten Abnutzung sowie zum Lösen der Radbefestigung führen können.

Auch eine Achswinkelabweichung, bei der die Achse X₅ des Radbefestigungsbolzens 310 und die Achse X₆ der Durchtrittsbohrung 320 in einem Winkel zueinander stehen, wird wie im Beispiel der Fig. 4 kompensiert.

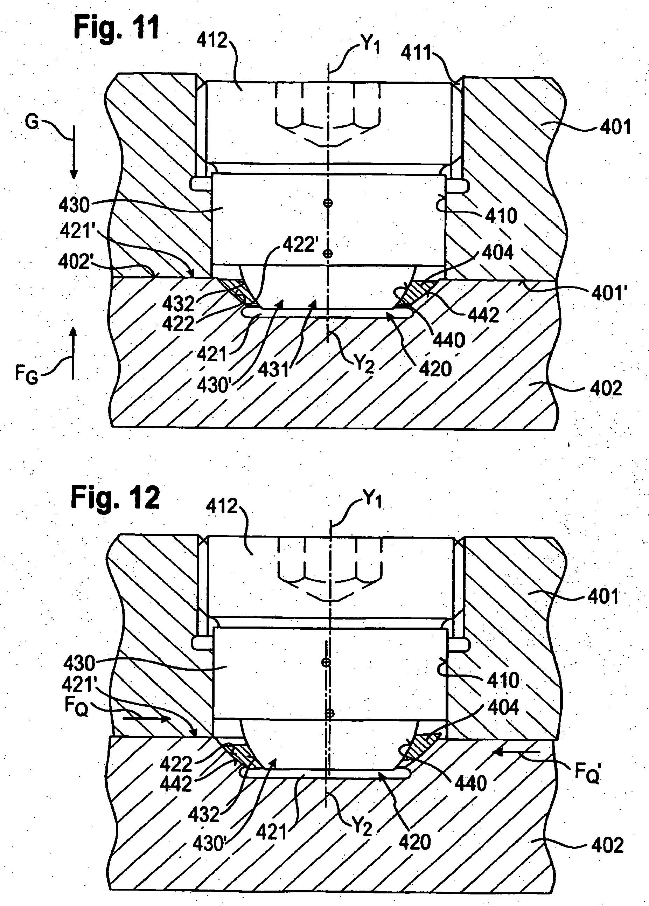

Eine weitere Anwendung einer erfindungsgemäßen Formschlussverbindung zum Ausgleich von Lagefehlern (zum Beispiel Achsversatz und/oder Achswinkelabweichung) ist in den Figuren 11 und 12 dargestellt.

Die beiden miteinander zu verbindenden Teile 401 und 402 sind hier übereinander angeordnet und werden durch Einwirkung externer Kräfte, wie zum Beispiel der Schwerkraft G und einer Abstützkraft F_{G}, gegeneinander gehalten. Ihre einander zugewandten Stirnflächen 401' und 402' berühren sich. In der Praxis kann das erste Teil 401 beispielsweise von einer Brücke und das zweite Teil 402 von einem Brückenlager gebildet sein.

Das zweite Teil 402 ist an seiner Oberseite mit einer kreisförmigen Ausnehmung 420 versehen, die im Bereich ihres zum ersten Teil 401 weisenden Mündungsrands, der das zweite Formschlusselement 421' bildet, mit einer ringförmigen, im Querschnitt kugelsegmentartig gekrümmten konkaven Fläche 422 versehen ist. Am Boden der Ausnehmung 420 ist ein Sacklochabschnitt 421 vorgesehen. Der Durchmesser des Sacklochabschnitts 421 ist größer als der radial innere Rand 422' der kugelsegmentartig gekrümmten konkaven Fläche 422, so dass der Sacklochabschnitt 422 wie im Beispiel der Fig. 2 bis 4 eine eine Entlastungsrille bildende Hinterschneidung des radial inneren Randes 422' ausbildet.

Das erste Teil 401 ist mit einer Durchgangsbohrung 410 versehen. Im Fall der idealen Ausrichtung der beiden Teile 401 und 402 zueinander stimmen die Achse Y₁ der Durchgangsbohrung 410 und die Achse Y₂ der kreisförmigen Ausnehmung 420 überein, wie in Fig. 11 zu sehen ist.

In die Ausnehmung 420 ist ein ringförmiges Ausgleichselement 404 eingelegt, das außen wie das in Fig. 7 gezeigte Ausgleichselement 4 ausgebildet und analog dazu mit einer radial äußeren konvex gekrümmten Ringfläche 442 und einer radial inneren konkav gekrümmten Ringfläche 440 versehen ist. Das Ausgleichselement greift in die Ausnehmung 420 ein. Dabei liegt die im Durchmesser größere, konvex gekrümmte Ringfläche 442 des Ausgleichselements 404 an der kugelsegmentartig gekrümmten konkaven Fläche 422 im Bereich der Mündung der Ausnehmung 420 im zweiten Teil 402 an.

In die Durchgangsbohrung 410 ist ein zylindrisches Einsatzstück 430 passgenau eingesetzt, das in Radialrichtung im wesentlichen spielfrei, aber in Axialrichtung (in Richtung der Bohrungsachse Y₁) verschiebbar in der Durchgangsbohrung 410 aufgenommen ist. Die Durchgangsbohrung 410 ist in ihrem vom zweiten Teil 402 abgewandten Endbereich mit einem Innengewindeabschnitt 411 versehen, in den eine Spannschraube 412 eingeschraubt ist. Mittels der Spannschraube 412 kann das Einsatzstück 430 gegen das Ausgleichselement 404 gespannt werden.

Das Einsatzstück 430 weist an seiner zum zweiten Teil 402 weisenden Unterseite einen ringförmigen Axialansatz 431 auf, der das erste Formschlusselement 430' bildet und der dazu an seinem zum zweiten Teil 402 weisenden Abschnitt mit einer kugelsegmentartig gekrümmten konvexen Fläche 432 versehen ist, die in das ringförmige Ausgleichselement 404 eingreift und zur Anlage an dessen konkaver Ringfläche 440 ausgebildet ist. Ist das Einsatzstück 430 gegen das Ausgleichselement 404 gespannt, liegt die kugelsegmentartig gekrümmte konvexe Fläche 432 des Einsatzstücks 430 gegen die radial innere, konkave Ringfläche 440 des Ausgleichselements 404 an.

Die Funktionsweise dieser Ausführungsform der erfindungsgemäßen Formschlussverbindung wird nachstehend anhand der Fig. 12 beschrieben.

Wenn die beiden Teile 1 und 2 seitlich gegeneinander verschoben sind, dann fluchten die Achse Y₁ der Durchgangsbohrung 410 im ersten Teil 401 und die Achse Y₂ der kreisförmigen Ausnehmung 420 im zweiten Teil 402 nicht miteinander, sondern sind seitlich zueinander versetzt wie es in Fig. 12 gezeigt ist. Zunächst ist die Spannschraube 412 gelöst, so dass sich das Einsatzstück 430 entlang der Achse Y₁ verschieben lässt. Wird das Einsatzstück 430 nun mittels der Spannschraube 412 gegen das Ausgleichselement 404 bewegt, stellt sich das Ausgleichselement 404 bei zunehmendem Anziehen der Spannschraube 412 wegen des Achsversatzes zwischen den Achsen Y₁ und Y₂ schräg bis die kugelsegmentartig gekrümmte Fläche 440 des Ausgleichselements 404 und die kugelsegmentartig gekrümmte Fläche 432 des Einsatzstücks 430 aneinander anliegen. Die in Axialrichtung voneinander abgewandten stirnseitigen Umlaufkanten des Ausgleichselements 404 tauchen dabei zum Teil in die in der Bohrung 410 und im Sacklochabschnitt 421 gebildeten Hohlräume ein.

Zusammen mit den ebenfalls aneinander anliegenden kugelsegmentartig gekrümmten Flächen 422 des zweiten Teils 402 und 442 des Ausgleichselements 404 ist bei im wesentlichen radialer Spielfreiheit des Einsatzstücks 430 in der Durchgangsbohrung 410 eine Formschlussverbindung zwischen dem ersten Teil 401 und dem zweiten Teil 402 geschaffen, über die Querkräfte F_{Q}, F_{Q}' übertragen werden können.

Die Erfindung ist nicht auf das obige Ausführungsbeispiel beschränkt, das lediglich der allgemeinen Erläuterung des Kerngedankens der Erfindung dient. Im Rahmen der Ansprüche kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Formschlussverbindung mit Ausgleich von Lagefehlern, mit
- einem ersten (1; 201; 301; 401) und einem zweiten (2; 202; 302; 402) miteinander zu verbindenden Teil;
- einem ersten, dem ersten Teil (1; 201; 301; 401) zugeordneten kreisförmigen Formschlusselement (30'; 230'; 330'; 430');
- einem zweiten, dem zweiten Teil (2; 202; 302; 402) zugeordneten kreisförmigen Formschlusselement (21; 221; 321; 421') und
- einem zwischen dem ersten Formschlusselement und dem zweiten Formschlusselement vorgesehenen Ausgleichselement,
- wobei das Ausgleichselement als Ausgleichsring (4; 204; 304; 404) ausgebildet ist;
- wobei die Formschlusselemente in ihrer axialen Lage bestimmt sind und mit dem Ausgleichsring (4; 204; 304; 404) eine Formschlusseinrichtung bilden, die das erste Teil (1; 201; 301; 401) und das zweite Teil (2; 202; 302; 402) zueinander positioniert;
- wobei das erste Formschlusselement auf seiner zum zweiten Formschlusselement weisenden Seite mit einer ersten kugelsegmentartig gekrümmten Fläche (32; 232; 332; 432) versehen ist, deren Krümmungsmittelpunkt (M1; M3) auf der Achse (X; X₅) des ersten Formschlusselements gelegen ist;
- wobei das zweite Formschlusselement auf seiner zum ersten Formschlusselement weisenden Seite mit einer zweiten kugelsegmentartig gekrümmten Fläche (22; 222; 322; 422) versehen ist, deren Krümmungsmittelpunkt (M2) auf der Achse (X₂; X₆) des zweiten Formschlusselements gelegen ist, und
- wobei der Ausgleichsring (4; 204; 304; 404) eine dritte (40; 240; 340; 440) und eine vierte (42; 242; 342; 442) kugelsegmentartig gekrümmte Fläche aufweist, deren jeweilige Krümmung an die ihr gegenüber gelegene erste (32; 232; 332; 432) beziehungsweise zweite (22; 222; 322; 422) kugelsegmentartig gekrümmte Fläche angepasst ist; **dadurch gekennzeichnet**
- **dass** der Ausgleichsring (4; 204; 304; 404) eine radiale Innenseite mit einem Innendurchmesser aufweist, der mit der dritten, radial inneren kugelsegmentartig gekrümmten Ringfläche (40; 240; 340; 440 versehen ist,
- **dass** der Ausgleichsring (4; 204; 304; 404) eine radiale Außenseite aufweist, die mit der vierten, radial äußeren kugelsegmentartig gekrümmten Fläche (42; 242; 342; 442) versehen ist,
- **dass** die radial innere kugelsegmentartig gekrümmte Fläche (40; 240; 340; 440) des Ausgleichsrings (4; 204; 304; 404) kugelsegmentartig mit der gekrümmten Fläche (32; 232; 332; 432) des ersten Formschlusselements (30'; 230'; 330'; 430') in Berührung steht,
- **dass** die radial äußere kugelsegmentartig gekrümmte Fläche (42; 242; 342; 442) des Ausgleichsrings (4; 204; 304; 404) mit der kugelsegmentartig gekrümmten Fläche (22; 222; 322; 422) des zweiten Formschlusselements (21; 221; 321; 421') in Berührung steht,
- **dass** die radial innere kugelsegmentartig gekrümmte Fläche (40; 240; 340; 440) und die radial äußere kugelsegmentartig gekrümmte Fläche (42; 242; 342; 442) des Ausgleichsrings (4; 204; 304; 404) in Radialrichtung voneinander abgewandt gelegene Flächen sind;
- **dass** der Krümmungsmittelpunkt (M1') der radial inneren kugelsegmentartig gekrümmten Fläche (40; 240; 340; 440) und der Krümmungsmittelpunkt (M2') der radial äußeren kugelsegmentartig gekrümmten Fläche (42; 242; 342; 442) in Axialrichtung voneinander beabstandet sind, wobei der Krümmungsmittelpunkt (M1') der radial inneren kugelsegmentartig gekrümmten Fläche (40; 240; 340; 440) näher am Ausgleichsring (4; 204; 304; 404) gelegen ist als der Krümmungsmittelpunkt (M2') der radial äußeren kugelsegmentartig gekrümmten Fläche (42; 242; 342; 442) und
- **dass** der Ausgleichsring (4; 204; 304; 404) zwischen den Formschlusselementen (30'; 230'; 330'; 430'; 21; 221; 321; 421') so verschwenkbar ist, dass dabei die gekrümmten Flächen in Berührung miteinander bleiben.

2. Formschlussverbindung nach Anspruch 1,
**dadurch gekennzeichnet,**
- **dass** die erste (32; 232; 332; 432) und die vierte (42; 242; 342; 442) kugelsegmentartig gekrümmte Fläche konvex gekrümmt sind und
- **dass** die zweite (22; 222; 322; 422) und die dritte (40; 240; 340; 440) kugelsegmentartig gekrümmte Fläche konkav gekrümmt sind.

3. Formschlussverbindung nach Anspruch 1,
**dadurch gekennzeichnet,**
- **dass** das erste Formschlusselement in einer Öffnung des ersten Teils (401) vorgesehen ist und
- **dass** das zweite Formschlusselement in einer Öffnung des zweiten Teils (402) vorgesehen ist.

4. Formschlussverbindung nach Anspruch 1 oder 2,
**dadurch gekennzeichnet,**
- **dass** das erste Formschlusselement an einer Bolzeneinrichtung (3; 203; 303) vorgesehen ist, wobei die Bolzeneinrichtung (3; 203; 303) mit dem ersten Teil (1; 201; 301) verbunden und in ihrer axialen Lage bestimmt ist und eine Bohrung (20; 220; 320) des zweiten Teils (2; 202; 302) durchdringt;
- **dass** das zweite Formschlusselement an der Bohrung (20; 220; 320) des zweiten Teils (2; 202; 302) vorgesehen ist;
- **dass** das zweite Teil (2; 202; 302) zwischen der Bolzeneinrichtung (3; 203; 303) und dem ersten Teil (1; 201; 301) eingespannt ist;
- **dass** die Bolzeneinrichtung (3; 203; 303) an ihrem vom ersten Teil (1; 201; 301) abgewandten Ende auf der zum zweiten Teil (2; 202; 302) weisenden Seite entlang ihres Umfangs zumindest einen radialen Abschnitt (30; 230; 330) aufweist, der mit der ersten kugelsegmentartig gekrümmten Fläche (32; 232; 332) versehen ist, deren Krümmungsmittelpunkt (M1; M3) auf der Achse (X; X5) der Bolzeneinrichtung (3; 203; 303) gelegen ist,
- **dass** das zweite Teil (2; 202; 302) entlang des Umfangs der Bohrung (20; 220; 320) auf der zum radialen Abschnitt (30; 230; 330) der Bolzeneinrichtung (3; 203; 303) weisenden Seite mit der zweiten kugelsegmentartig gekrümmten Fläche (22; 222; 322) versehen ist, deren Krümmungsmittelpunkt (M2; M4) auf der Achse (X2; X6) der Bohrung (20; 220; 320) gelegen ist, und
- **dass** der Ausgleichsring (4; 204; 304) zwischen dem zweiten Teil (2; 202; 302) und dem radialen Abschnitt (30; 230; 330) der Bolzeneinrichtung (3; 203; 303) vorgesehen ist.

5. Formschlussverbindung nach Anspruch 4,
**dadurch gekennzeichnet,**
**dass** die Bolzeneinrichtung (3) von einer Schraube (31) gebildet ist, wobei die Schraube (31) in eine Gewindebohrung (10) des ersten Teils (1) eingeschraubt ist und wobei der radiale Abschnitt (30) an einem Schraubenkopf (33) der Schraube (31) ausgebildet ist.

6. Formschlussverbindung nach Anspruch 4,
**dadurch gekennzeichnet,**
**dass** die Bolzeneinrichtung (203) von einer Schraube (231) gebildet ist, wobei die Schraube (231) eine Bohrung (210) des ersten Teils (201) durchdringt und in eine sich am ersten Teil (201) abstützende Mutter (237) eingeschraubt ist.

7. Formschlussverbindung nach Anspruch 4,
**dadurch gekennzeichnet,**
**dass** die Bolzeneinrichtung (303) von einem mit dem ersten Teil verbundenen Gewindebolzen (310) und einer auf diesen aufgeschraubten Mutter (350) gebildet ist, wobei der radiale Abschnitt (330) an der Mutter (350) vorgesehen ist.

8. Formschlussverbindung nach einem der vorhergehenden Ansprüche zur Befestigung eines Rades (302) an einer Radaufnahme (301), insbesondere als Zentralverschluss (300) eines Rades (302), wobei das erste Teil von der Radaufnahme (301) gebildet ist und wobei das zweite Teil vom Rad (302) gebildet ist.

9. Formschlussverbindung nach Anspruch 7 und 8,
**dadurch gekennzeichnet,**
**dass** die Radaufnahme (301) einen mit einem Gewinde (311) versehenen zentralen Radbefestigungsbolzen (310) aufweist und dass der radiale Abschnitt (330) an der auf den Radbefestigungsbolzen (310) aufschraubbaren Mutter (350) vorgesehen ist.

10. Formschlussverbindung nach Anspruch 8 oder 9,
**dadurch gekennzeichnet,**
**dass** die Radaufnahme (301) mit einer ersten ringförmigen Profilierung (5), vorzugsweise einer Plan-Kerbverzahnung wie zum Beispiel einer Hirth-Verzahnung, versehen ist, dass das Rad (302) mit einer zweiten ringförmigen Profilierung (6), vorzugsweise einer Plan-Kerbverzahnung wie zum Beispiel einer Hirth-Verzahnung, versehen ist, wobei die erste und die zweite ringförmige Profilierung (5, 6) ineinandergreifen und das Rad (302) bezüglich der Radaufnahme (301) zentrieren.

11. Schraube für eine Formschlussverbindung nach einem der Ansprüche 5, 6, 8 oder 10,
**dadurch gekennzeichnet,**
**dass** der Schraubenkopf (33; 233) an seiner zum Gewindeabschnitt (35; 236) der Schraube (31; 231) weisenden Seite mit einer kugelsegmentartigen konvex gekrümmten Fläche (32; 232) versehen ist, deren Krümmungsmittelpunkt (M1) auf der Achse (X) der Schraube (31; 231) gelegen ist.

12. Mutter für eine Formschlussverbindung nach einem der Ansprüche 7 bis 10,
**dadurch gekennzeichnet,**
**dass** die Mutter (350) auf zumindest einer axialen Stirnseite mit einer kugelsegmentartig konvex gekrümmten Fläche (332) versehen ist, deren Krümmungsmittelpunkt (M3) auf der Achse (X5) der Mutter (350) gelegen ist.

13. Ausgleichselement, insbesondere Ausgleichsring, für eine Formschlussverbindung nach einem der Ansprüche 1 bis 10,
**dadurch gekennzeichnet,**
**dass** das Ausgleichselement (4; 204; 304; 404) mit jeweils einer kugelsegmentartig gekrümmten Fläche (40, 42; 240, 242; 340, 342; 440, 442) versehen ist, deren jeweiliger Krümmungsmittelpunkt (M1', M2') auf der Achse (X3) des Ausgleichselements gelegen ist.

14. Ausgleichselement, insbesondere Ausgleichsring, nach Anspruch 13,
**dadurch gekennzeichnet,**
**dass** eine (40; 240; 340; 440) der beiden kugelsegmentartig gekrümmten Flächen konkav ist und dass die andere (42; 242; 342; 442) der beiden kugelsegmentartig gekrümmten Flächen konvex ist.

## Claims

1. A form-locking connection with compensation of position errors, comprising:
- a first component (1; 201; 301; 401) and a second component (2; 202; 302; 402) to be interconnected;
- a first circular form-locking element (30'; 230'; 330'; 430') associated with the first component (1; 201; 301; 401);
- a second circular form-locking element (21; 221; 321; 421') associated with the second component (2; 202; 302; 402) and
- a compensation element provided between the first form-locking element and the second form-locking element,
- wherein the compensation element is configured as a compensation ring (4; 204; 304; 404);
- wherein the form-locking elements are determined with respect to their axial positions and form a form-locking arrangement with the compensation ring (4; 204; 304; 404) which form-locking arrangement positions the first component (1; 201; 301; 401) and the second component (2; 202; 302; 402) relative to one another;
- wherein the first form-locking element is provided with a first spherical segment shaped cambered surface (32; 232; 332; 432) on its side oriented towards the second form-locking element, wherein a center of curvature (M1; M3) of the first spherical segment shaped cambered surface is arranged on an axis (X; X₅) of the first form-locking element;
- wherein the second form-locking element is provided with a second spherical segment shaped cambered surface (22; 222; 322; 422) on its side oriented towards the first form-locking element, wherein a center of curvature (M2) of the second spherical segment shaped cambered surface is arranged on an axis (X₂; X₆) of the second form locking element, and
- wherein the compensation ring (4; 204; 304; 404) includes a third (40; 240; 340; 440) and a fourth (42; 242; 342; 442) spherical segment shaped cambered surface whose respective curvature is adapted to the opposite first spherical segment shaped cambered surface (32; 232; 332; 432) and the opposite second spherical segment shaped cambered surface (22; 222; 322; 422), respectively;
**characterized**
- **in that** the compensation ring (4; 204; 304; 404) includes a radial inside with an inner diameter which is provided with the radially inner third spherical segment shaped cambered surface (40; 240; 340; 440),
- **in that** the compensation ring (4; 204; 304; 404) includes a radial outside which is provided with the radially outer fourth spherical segment shaped cambered surface (42; 242; 342; 442),
- **in that** the radially inner spherical segment shaped cambered surface (40; 240; 340; 440) of the compensation ring (4; 204; 304; 404) contacts the spherical segment shaped cambered surface of the first form-locking element (30'; 230'; 330'; 430') in a spherical segment,
- **in that** the radially outer spherical segment shaped cambered surface (42; 242; 342; 442) of the compensation ring (4; 204; 304; 404) contacts the spherical segment shaped cambered surface of the second form-locking element (21; 221; 321; 421'),
- **in that** the radially inner spherical segment shaped cambered surface (40; 240; 340; 440) and the radially outer spherical segment shaped cambered surface (42; 242; 342; 442) of the compensation ring (4; 204; 304; 404) are surfaces that are oriented away from one another in a radial direction,
- **in that** the curvature center (M1') of the radially inner spherical segment shaped cambered surface (40; 240; 340; 440) and the curvature center (M2') of the radially outer spherical segment shaped cambered surface (42; 242; 342; 442) are offset from one another in axial direction, wherein the curvature center (M1') of the radially inner spherical segment shaped cambered surface (40; 240; 340; 440) is closer to the compensation ring (4; 204; 304; 404) than the curvature center (M2') of the radially outer spherical segment shaped cambered surface (42; 242; 342; 442) and
- **in that** the compensation ring (4; 204; 304; 404) is pivotable between the form-locking elements (30'; 230'; 330'; 430'; 21; 221; 321; 421') so that the cambered surfaces remain in contact with one another.

2. The form-locking connection according to claim 1,
**characterized**
- **in that** the first (32; 232; 332; 432) and the fourth (42; 242; 342; 442) spherical segment shaped cambered surfaces are cambered convex, and
- **in that** the second (22; 222; 322; 422) and the third (40; 240; 340; 440) spherical segment shaped cambered surfaces are cambered concave.

3. The form-locking connection according to claim 1,
**characterized**
- **in that** the first form-locking element is provided in an opening of the first component (401), and
- **in that** the second form-locking element is provided in an opening of the second component (402).

4. The form-locking connection according to claim 1 or 2,
**characterized**
- **in that** the first form-locking element is provided at a bolt device (3; 203; 303), wherein the bolt device (3; 203; 303) is connected with the first component (1; 201; 301) and defined with respect to its axial position and extends through a borehole (20; 220; 320) of the second component (2; 202; 302);
- **in that** the second circular form-locking element is provided at the borehole (20; 220; 320) of the second component (2; 202; 302);
- **in that** the second component (2; 202; 302) is clamped between the bolt device (3; 203; 303) and the first component (1; 201; 301);
- **in that** the bolt device (3; 203; 303) comprises at least one radial section (30; 230; 330) at its end oriented away from the first component (1; 201; 301) on its side oriented towards the second component (2; 202; 302) along its circumference, wherein the at least one radial section is provided with the first spherical segment shaped cambered surface (32; 232; 332) whose curvature center (M1; M3) is arranged on the axis (X; X5) of the bolt device (3; 203; 303),
- **in that** the second component (2; 202; 302) along the circumference of the borehole (20; 220; 320) on a side oriented towards the radial section (30; 230; 330) of the bolt device (3; 203; 303) is provided with the second spherical segment shaped cambered surface (22; 222; 322) whose curvature center (M4; M2) is arranged on an axis (X2; X6) of the borehole (20; 220; 320), and
- **in that** the compensation ring (4; 204; 304) is provided between the second component (2; 202; 302) and the radial section (30; 230; 330) of the bolt device (3; 203; 303).

5. The form-locking connection according to claim 4,
**characterized**
**in that** the bolt device (3) is formed by a screw (31), wherein the screw (31) is threaded into a threaded borehole (10) of the first component (1), and wherein the radial section (30) is configured at a screw head (33) of the screw (31).

6. The form-locking connection according to claim 4,
**characterized**
**in that** the bolt device (203) is formed by a screw (231), wherein the screw (231) extends through a borehole (210) of the first component (201) and is threaded into a nut (237) supported at the first component (201).

7. The form-locking connection according to claim 4,
**characterized**
**in that** the bolt device (303) is formed by a threaded bolt (310) connected with the first component and by a nut (350) threaded onto the threaded bolt, wherein the radial section (330) is provided at the nut (350).

8. The form-locking connection according to one of the preceding claims for attaching a wheel (302) at a wheel receiver (301), in particular configured as a central locking device (300) of a wheel (302), wherein the first component is formed by the wheel receiver (301), and wherein the second component is formed by the wheel (302).

9. The form-locking connection according to claim 7 and 8,
**characterized**
**in that** the wheel receiver (301) comprises a central wheel attachment bolt (310) provided with a thread (311), and in that the radial section (330) is provided at the nut (350) that is threadable onto the threaded wheel attachment bolt (310).

10. The form-locking connection according to claim 8 or 9,
**characterized**
**in that** the wheel receiver (301) is provided with a first annular profile (5), preferably a planar notch teething, like for example a Hirth-teething, in that the wheel (302) is provided with a second annular profile (6), preferably a planar notch teething, like for example a Hirth-teething, wherein the first and the second annular profile (5, 6) engage one another and center the wheel (302) with respect to the wheel receiver (301).

11. A screw for a form-locking connection according to one of the claims 5, 6, 8 or 10,
**characterized**
**in that** the screw head (33; 233) is provided with a spherical segment shaped convex cambered surface (32; 231) at its side oriented towards the thread section (35; 236) of the screw (31; 231), wherein the curvature center (M1) of the convex cambered surface is arranged on the axis (X) of the screw (31; 231).

12. A nut for a form-locking connection according to one of the claims 7 to 10,
**characterized**
**in that** the nut (350) is provided with a spherical segment shaped convex cambered surface (332) on at least one axial face, wherein the curvature center (M3) of the convex cambered surface is arranged on the axis (X5) of the nut (350).

13. A compensation element, preferably a compensation ring, for a form-locking connection according to one of the claims 1 to 10,
**characterized**
**in that** the compensation element (4; 204; 304; 404) is respectively provided with a spherical segment shaped cambered surface (40, 42; 240, 242; 340, 342; 440, 442) whose respective curvature center (M1', M2') is arranged on the axis (X3) of the compensation element.

14. A compensation element,in particular compensation ring, according to claim 13,
**characterized**
**in that** a first one (40; 240; 340; 440) of the two spherical segment shaped cambered surfaces is concave and in that the other one (42; 242; 342; 442) of the two spherical segment shaped cambered surfaces is convex.

## Revendications

1. Liaison à coopération de formes avec compensation d'erreurs de position, comprenant
- une première pièce (1 ; 201 ; 301 ; 401) et une seconde pièce (2 ; 202 ; 302 ; 402) à relier l'une à l'autre ;
- un premier élément à coopération de formes (30' ; 230' ; 330' ; 430') de forme circulaire et associé à la première pièce (1 ; 201 ; 301 ; 401) ;
- un second élément à coopération de formes (21 ; 221 ; 321 ; 421') de forme circulaire et associé à la seconde pièce (2 ; 202 ; 302 ; 402), et
- un élément de compensation prévu entre le premier élément à coopération de formes et le second élément à coopération de formes,
- dans laquelle l'élément de compensation est réalisé sous forme de bague de compensation (4 ; 204 ; 304 ; 404) ;
- dans laquelle les éléments à coopération de formes sont déterminés dans leur longueur axiale et forment avec la bague de compensation (4 ; 204 ; 304 ; 404) un système à coopération de formes qui positionne la première pièce (1 ; 201 ; 301 ; 401) et la seconde pièce (2 ; 202 ; 302 ; 402) l'une par rapport à l'autre ;
- dans laquelle le premier élément à coopération de formes est doté, sur son côté tourné vers le second élément à coopération de formes, d'une première surface incurvée (32 ; 232 ; 332 ; 432) semblable à un segment de sphère, dont le centre de courbure (M1 ; M3) est situé sur l'axe (X ; X5) du premier élément à coopération de formes ;
- dans laquelle le second élément à coopération de formes est doté, sur son côté tourné vers le premier élément à coopération de formes, d'une seconde surface incurvée (22 ; 222 ; 322 ; 422) semblable à un segment de sphère, dont le centre de courbure (M2) est situé sur l'axe (X2 ; X6) du second élément à coopération de formes, et
- dans laquelle la bague de compensation (4 ; 204 ; 304 ; 404) comporte une troisième surface incurvée (40 ; 240 ; 340 ; 440) semblable à un segment de sphère et une quatrième surface incurvée (42 ; 242 ; 342 ; 442) semblable à un segment de sphère, dont les courbures respectives sont ajustées à la première (32 ; 232 ; 332 ; 432) et respectivement à la seconde (22 ; 222 ; 322 ; 422) surface incurvée semblable à un segment de sphère qui leur sont respectivement opposées ;
**caractérisée en ce que**
- la bague de compensation (4 ; 204 ; 304 ; 404) présente une face intérieure radiale avec un diamètre intérieur, qui est pourvue de la troisième surface annulaire radialement intérieure incurvée (40 ; 240 ; 340 ; 440) semblable à un segment de sphère,
- la bague de compensation (4 ; 204 ; 304 ; 404) présente une face extérieure radiale, qui est pourvue de la quatrième surface radialement extérieure incurvée (42 ; 242 ; 342 ; 442) semblable à un segment de sphère,
- la surface radialement intérieure incurvée (40 ; 240 ; 340 ; 440) de la bague de compensation (4 ; 204 ; 304 ; 404) est en contact, de manière semblable à un segment de sphère, avec la surface incurvée (32 ; 232 ; 332 ; 432) du premier élément à coopération de formes (30' ; 230' ; 330' ; 430'),
- la surface radialement extérieure incurvée (42 ; 242 ; 342 ; 442) semblable à un segment de sphère, de la bague de compensation (4 ; 204 ; 304 ; 404) est en contact avec la surface incurvée (22 ; 222 ; 322 ; 422) semblable à un segment de sphère du second élément à coopération de formes (21 ; 221 ; 321 ; 421'),
- la surface radialement intérieure incurvée (40 ; 240 ; 340 ; 440) semblable à un segment de sphère et la surface radialement extérieure incurvée (42 ; 242 ; 342 ; 442) de la bague de compensation (4 ; 204 ; 304 ; 404) sont des surfaces situées de manière détournée l'une de l'autre en direction radiale ;
- le centre de courbure (M1') de la surface radialement intérieure incurvée (40 ; 240 ; 340 ; 440) semblable à un segment de sphère, et le centre de courbure (M2') de la surface radialement extérieure incurvée (42 ; 242 ; 342 ; 442) semblable à un segment de sphère sont à distance l'un de l'autre en direction axiale, de sorte que le centre de courbure (M1') de la surface radialement intérieure incurvée (40 ; 240 ; 340 ; 440) semblable à un segment de sphère est situé plus proche de la bague de compensation (4 ; 204 ; 304 ; 404) que le centre de courbure (M2') de la surface radialement extérieure incurvée (42 ; 242 ; 342 ; 442) semblable à un segment de sphère, et
- la bague de compensation (4 ; 204 ; 304 ; 404) est capable de pivoter entre les éléments à coopération de formes (36' ; 230' ; 336' ; 430' ; 21 ; 221 ; 321 ; 421') de telle façon que les surfaces incurvées restent ici en contact l'une avec l'autre.

2. Liaison à coopération de formes selon la revendication 1, **caractérisée en ce que**
- la première surface incurvée (32 ; 232 ; 332 ; 432) et la quatrième surface incurvée (42 ; 242 ; 342 ; 442) semblables à un segment de sphère sont incurvées de manière convexe, et
- la seconde surface incurvée (22 ; 222 ; 322 ; 422) et la troisième surface incurvée (40 ; 240 ; 340 ; 440) semblables à un segment de faire sont incurvées de manière concave.

3. Liaison à coopération de formes selon la revendication 1, **caractérisée en ce que**
- le premier élément à coopération de formes est prévu dans une ouverture de la première pièce (401), et
- le second élément à coopération de formes est prévu dans une ouverture de la seconde pièce (402).

4. Liaison à coopération de formes selon la revendication 1 ou 2, **caractérisée en ce que**
- le premier élément à coopération de formes est prévu dans un dispositif de type boulon (3 ; 203 ; 303), ledit dispositif de type boulon (3 ; 203 ; 303) étant relié à la première pièce (1 ; 201 ; 301) et étant déterminé dans sa longueur axiale, et traverse un perçage (20 ; 220 ; 320) de la seconde pièce (2 ; 202 ; 302) ;
- le second élément à coopération de formes est prévu au niveau du perçage (20 ; 220 ; 320) de la seconde pièce (2 ; 202 ; 302) ;
- la seconde pièce (2 ; 202 ; 302) est enserrée entre le dispositif de type boulon (3 ; 203 ; 303) et la première pièce (1 ; 201 ; 301) ;
- le dispositif de type boulon (3 ; 203 ; 303) comporte, à son extrémité détournée de la première pièce (1 ; 201 ; 301) sur le côté tourné vers la seconde pièce (2 ; 202 ; 302) au moins un tronçon radial (30 ; 230 ; 330), le long de sa périphérie, qui est pourvu d'une surface incurvée (32 ; 232 ; 332) semblable à un segment de sphère, dont le centre de courbure (M1 ; M3) est situé sur l'axe (X ; X5) du dispositif de type boulon (3 ; 203 ; 303),
- la seconde pièce (2 ; 202 ; 302) est pourvue, le long de la périphérie du perçage (20 ; 220 ; 320) et sur le côté tourné vers le tronçon radial (30 ; 230 ; 330) du dispositif de type boulon (3 ; 203 ; 303), de la seconde surface incurvée (22 ; 222 ; 322) semblable à un segment de sphère, dont le centre de courbure (M2 ; M4) est situé sur l'axe (X2 ; X6) du perçage (20 ; 220 ; 320), et
- la bague de compensation (4 ; 204 ; 304) est prévue entre la première pièce (2 ; 202 ; 302) et le tronçon radial (30 ; 230 ; 330) du dispositif de type boulon (3 ; 203 ; 303).

5. Liaison à coopération de formes selon la revendication 4, **caractérisée en ce que** le dispositif de type boulon (3) est formé par une vis (31), ladite vis (31) étant vissée dans un perçage taraudé (10) de la première pièce (1), et dans laquelle le tronçon radial (30) est réalisé sur une tête (33) de la vis (31).

6. Liaison à coopération de formes selon la revendication 4, **caractérisée en ce que** le dispositif de type boulon (203) est formé par une vis (231), ladite vis (231) traversant un perçage (210) de la première pièce (201), et étant vissée dans un écrou (237) qui s'appuie contre la première pièce (201).

7. Liaison à coopération de formes selon la revendication 4, **caractérisée en ce que** le dispositif de type boulon (303) est formé par un boulon fileté (310) relié à la première pièce et par un écrou (350) vissé sur ce boulon, et dans lequel le tronçon radial (330) est prévu sur l'écrou (350).

8. Liaison à coopération de formes selon l'une des revendications précédentes, pour la fixation d'une roue (302) sur un dispositif récepteur de roue (301), en particulier à titre de moyen de fermeture central (300) d'une roue (302), dans laquelle la première pièce est formée par le récepteur de roue (301) et la seconde pièce est formée par la roue (302).

9. Liaison à coopération de formes selon la revendication 7 et 8, **caractérisée en ce que** le récepteur de roue (301) comprend un boulon de fixation de roue central (310), doté d'un filetage (311), et **en ce que** le tronçon radial (330) est prévu sur l'écrou (350) à visser sur le boulon de fixation de roue (310).

10. Liaison à coopération de formes selon la revendication 8 ou 9, **caractérisée en ce que**
le récepteur de roue (301) est doté d'un premier profilage de forme annulaire (5), de préférence d'une denture à entaille plane, comme par exemple une denture de Hirth, **en ce que** la roue (302) est dotée d'un second profilage de forme annulaire (6), de préférence d'une denture à entaille plane, comme par exemple une denture de Hirth, dans laquelle le premier et le second profilage de forme annulaire (5, 6) s'engagent l'un dans l'autre et centrent la roue (302) par rapport au récepteur de roue (301).

11. Vis pour une liaison à coopération de formes selon l'une des revendications 5, 6, 8 ou 10,
**caractérisée en ce que** la tête de vis (33 ; 233) est dotée, sur son côté tourné vers le tronçon fileté (35 ; 236) de la vis (31 ; 231), d'une surface à courbure convexe (32 ; 232) semblable à un segment de sphère, dont le centre de courbure (M1) est situé sur l'axe (X) de la vis (31 ; 231).

12. Écrou pour une liaison à coopération de formes selon l'une des revendications 7 à 10,
**caractérisé en ce que** l'écrou (350) est doté, sur au moins une face frontale axiale, d'une surface incurvée convexe (332) semblable à un segment de sphère, dont le centre de courbure (M3) est situé sur l'axe (X5) de l'écrou (350).

13. Élément de compensation, en particulier bague de compensation, pour une liaison à coopération de formes selon l'une des revendications 1 à 10,
**caractérisé en ce que** l'élément de compensation (4 ; 204 ; 304 ; 404) est doté respectivement d'une surface incurvée (40, 42 ; 240, 242 ; 340, 342 ; 440, 442) semblable à un segment de sphère, dont le centre de courbure respectif (M1', M2') est situé sur l'axe (X3) de l'élément de compensation.

14. Élément de compensation, en particulier bague de compensation, selon la revendication 13,
**caractérisé en ce qu'**une (40 ; 240 ; 340 ; 440) des deux surfaces incurvées semblables à des segments de sphère est concave, et **en ce que** l'autre (42 ; 242 ; 342 ; 442) des deux surfaces incurvées semblables à des segments de sphère est convexe.
